# EUROPEAN PATENT SPECIFICATION

(11) **EP 3 494 033 B1**
(45) Date of publication and mention of the grant of the patent: **16.12.2020**
(21) Application number: 17752052.5
(22) Date of filing: 02.08.2017
(51) Int. Cl.: B62D 55/065, B62D 55/084, B62D 55/108

(54) **TRACK SYSTEM FOR A WORK VEHICLE**
RAUPENFAHRWERKSYSTEM FÜR EIN ARBEITSFAHRZEUG
SYSTÈME DE CHENILLES POUR ENGIN DE CHANTIER

(30) Priority: 02.08.2016 IT 201600081200
(43) Date of publication of application: 12.06.2019
(73) Proprietor: CNH Industrial Italia S.P.A., 10135 Turin (IT)
(72) Inventor: STEFANO, Fiorati, 44028 Poggio Renatico (Ferrara) (IT); PAOLINI, Francesco, 41122 Modena (IT); STOLTMAN, Russell, V., Frankfort Illinois 60423 (US); VIK, Brian D., Barnesville Minnesota 56514 (US)
(74) Representative: CNH Industrial IP Department
(86) International application number: PCT/EP2017/069495
(87) International publication number: WO 2018/024758

(56) References cited:
- EP-A2- 1 318 067
- AT-B- 146 854
- DE-C- 578 902
- GB-A- 416 548
- GB-A- 466 337
- US-A- 1 386 926
- US-A- 2 427 006
- US-A- 4 361 363
- US-A1- 2014 138 169

## Description

The present invention relates to a track system for a tracked work vehicle, such as a construction equipment vehicle or a military tracked vehicle or an agricultural vehicle, e.g. a combined harvester or the like.

### BACKGROUND OF THE INVENTION

A tracked work vehicle is provided with a suspension in order to increase adhesion and traction performances on soft grounds, such as grounds affected by a relatively high degree of humidity or grounds having a relatively high quantity of sand.

A rubber tracked vehicle is preferred to satisfy the need for a relatively high speed on paved streets, e.g. during a travel of the work vehicle to and from a construction site or a cultivated field. Furthermore, a rubber track tends to be relatively less expensive than other tracks.

The suspension is normally an undercarriage suspension and provides highest traction performances when the track adheres the ground. Sometimes the surface layer of the ground is not uniform and bodies made of a hard material are found on or immediately below the surface of the ground, such as rocks, spare metallic construction materials such as tubes or the like. AT146854 discloses a track system for a work vehicle comprising a driving wheel, an undercarriage beam hinged to a frame of the vehicle, one idler wheel and a first and second roller wheels

When encountering such an obstacle, it is important to find a compromise between stiffness and kinematic compliance for the design of the track-supporting idlers, rollers and structure of the suspension. Otherwise the track, in particular the rubber track, may undergo excessive wear. In particular it is important that the rollers are sufficiently constrained to provide proper support to the track when the ground is uniformly soft and are mobile enough to retract only in the near surroundings of a hard body on the ground surface. In both instances the scope is to keep or improve traction performances and, at the same time, lower the wear of the track.

### SUMMARY OF THE INVENTION

The scope of the present invention is achieved by providing a track system according to the appended set of claims..

According to the invention, an existing tracked vehicle is retrofittable by providing a first and a second tilting supports to attach a relative roller wheel or idler wheel to an undercarriage beam and with an elastic or visco-elastic connection to join first and second adjacent tilting supports one to the other such that, when a leading wheel moves down, a trailing wheel is pushed up, and vice-versa, via the elastic or visco-elastic connection.

Additional features of the invention are disclosed in the dependent claims.

### BRIEF DESCRIPTION OF THE DRAWINGS

For a better understanding of the present invention, the latter will further be disclosed with reference to the accompanying figures in which:
- Figure 1 shows a work vehicle that can be equipped with the present invention;
- Figures 2a and 2b show respective sketches of the principle underlying present invention;
- Figure 3 is a partial enlarged perspective view with elements hidden for clarity's sake, of a track system according to a first embodiment of the present invention;
- Figure 4 is a partial section view of figure 3 along a plane perpendicular to axes of idler wheels;
- Figure 5 is an enlarged partial side view of a second embodiment of the present invention;
- Figure 6 is a partial perspective view of figure 5 with elements hidden for clarity's sake;
- Figure 7 is a partial section view along a plane perpendicular to axes of idler wheels of a third embodiment of the present invention;
- Figure 8 is a partial perspective view of a fourth embodiment of the present invention;
- Figure 9 is a side view of figure 8; and
- Figure 10 is a partial lateral view of a fifth embodiment of the present invention

### DETAILED DESCRIPTION OF THE DRAWINGS

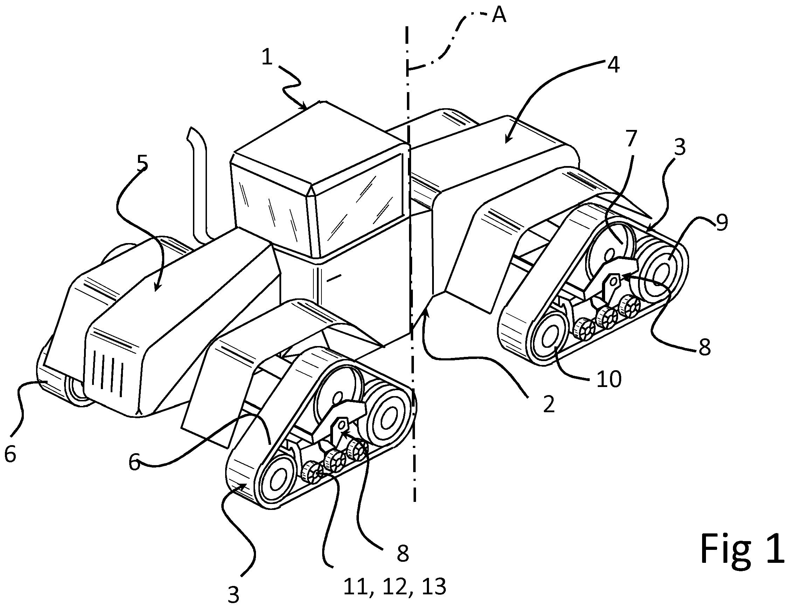

Figure 1 refers, as a whole, to a work vehicle 1 comprising a frame 2 and at least two rubber tracked, preferably four, track systems 3 attached to frame 2.

Frame 2 can be a rigid frame and in this case the vehicle may be provided with steering wheels (not shown); or a hinged frame having a front part 4, a rear part 5 hinged to front part 4 about axis A and a steering unit (not shown), preferably a hydraulic steering unit comprising linear actuators, to control the relative angular position of front part 4 with respect to rear part 5 about axis A.

Track system 3 comprises a rubber track 6, a drive wheel 7 extending from a differential (not shown) for driving track 6 and an undercarriage 8 pivoting with respect to frame 2. Undercarriage 8 comprises a front idler wheel 9, a rear idler wheel 10 about which track 6 is wrapped, roller wheels 11, 12, and 13 for guiding track 6, all of which are supported by an undercarriage beam 14, which extends fore-and-aft, and to which wheels 11, 12, 13, 9 and 10 are coupled. While the "front idler wheel," "rear idler wheel," "roller wheel" are singular terms, a plurality of wheels may be provided at each relative position in side-to-side orientation, such as in this embodiment. Advantageously, in order to provide a better contact surface with rubber track 6, at least wheels 11, 12, 13, 9 and 10 are twin wheels, i.e. each wheel comprises two wheels coupled side-to-side.

In particular, undercarriage beam 14 is connected to frame 2 in order to tilt in a plane parallel to axis A and oriented fore-and-aft when vehicle 1 travels along a straight path. Preferably, undercarriage beam 14 is hinged to frame 2 in order to tilt for a maximum of 15 degrees with respect to a neutral position shown in figure 1. Instead, drive wheel 7 is fixed to frame 2.

Each track system 3 further comprise tilting supports 20, 21, 22 to connect a respective roller wheel 11, 12, 13 to undercarriage beam 14 in order to provide one or more degrees of freedom to such rollers with respect to beam 14. Preferably tilting supports 20, 21, 22 are rigid rockers.

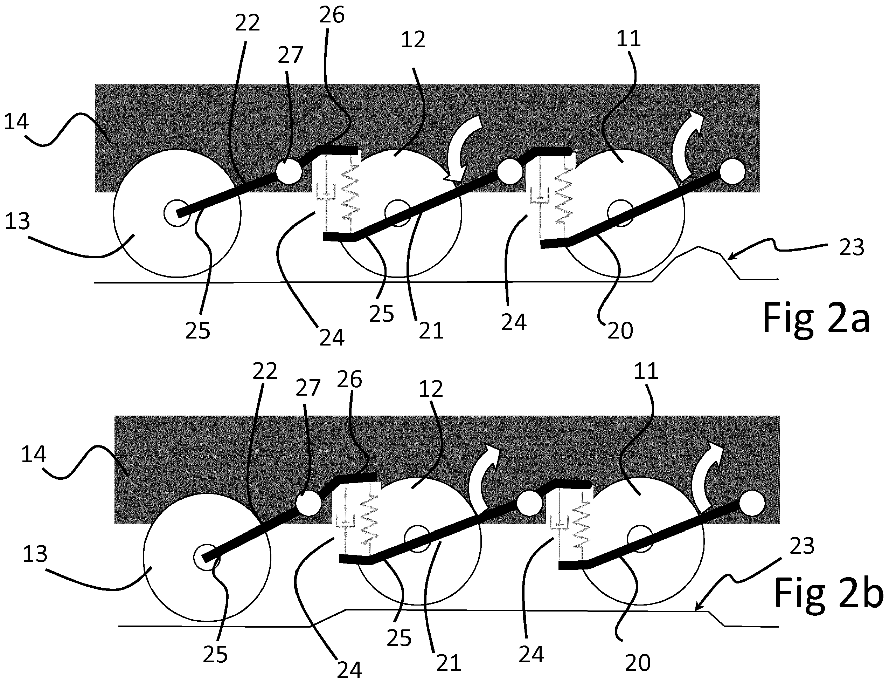

In addition track system 3 comprises at least one elastic or visco-elastic connection 23 to connect two adjacent tilting supports in such a way that an upwards motion of a leading roller, e.g. during climbing on an obstacle 24 (figure 2), applies a downwards action on the adjacent trailing roller and vice versa, such action being transmitted through the elastic or visco-elastic connection. In view of such desired effect, there is a specific ratio between connections 23 and rollers, i.e. given N rollers there are N-1 connections 23.

Preferably, the elastic or visco-elastic connection is preloaded in order to increase the tension of the track after mounting of the latter about drive wheel 7 and idler wheels 9, 10. Furthermore, the connection can be either passive, i.e. including a spring and a damper that are pre-set during assembly or by the user before a specific mission of vehicle 1, or active, i.e. including actuators to change the stiffness and/or the damping of the connection when vehicle 1 is working.

Preferably, the connection is visco-elastic and comprises inserts, e.g. a pack of discs, or bushings of a rubber material possibly reinforced either by particles or fibres or by one or more woven or non-woven layers. Rubber inserts or bushings are loaded to transfer the target action by either compression or shear or a combination of the two.

According to the functional sketch of figure 2, each tilting support 20, 21, 22 comprises a first end portion 25 carrying a relative roller 11, 12, 13 and a second end portion 26 projecting on an opposite side of the first end portion with respect to a hinge 27 for connection of the tilting support to undercarriage beam 14. In order to transfer the desired action from a leading roller to a trailing roller and vice versa, elastic or visco-elastic connection 23 is located between second end portion 26 of a tilting support and first end portion 25 of an adjacent tilting support. Rubber connection 23 may either attach to first end portion 25 at an opposite side of hinge 27 with respect to the relative roller (as shown in figure 2) or attach to end portion 25 on the same side of hinge 27 with respect to the relative roller. It is possible that the tilting support attached to the last or first roller is not provided with second end portion 26, as shown in figure 2.

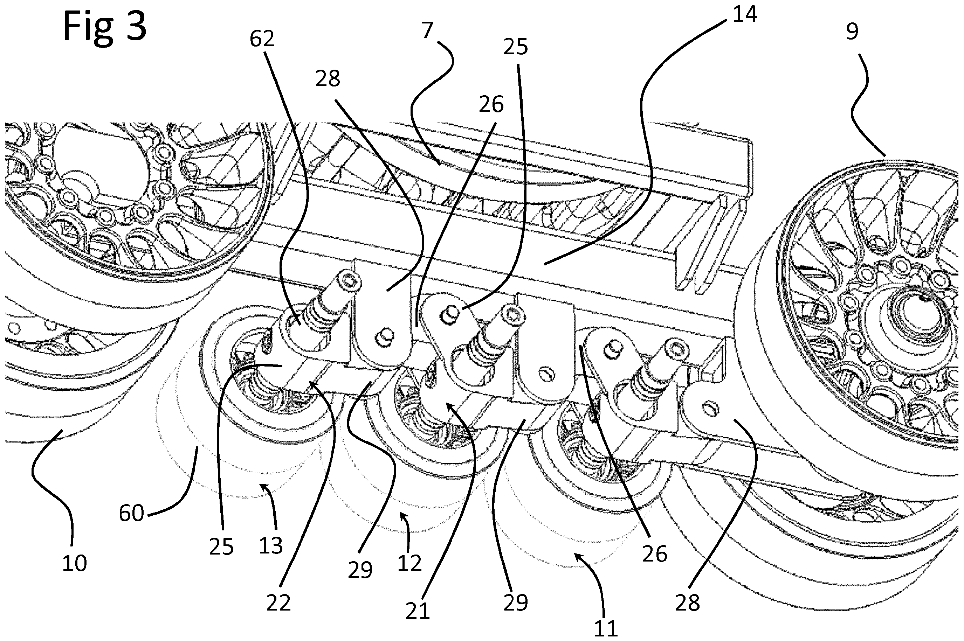

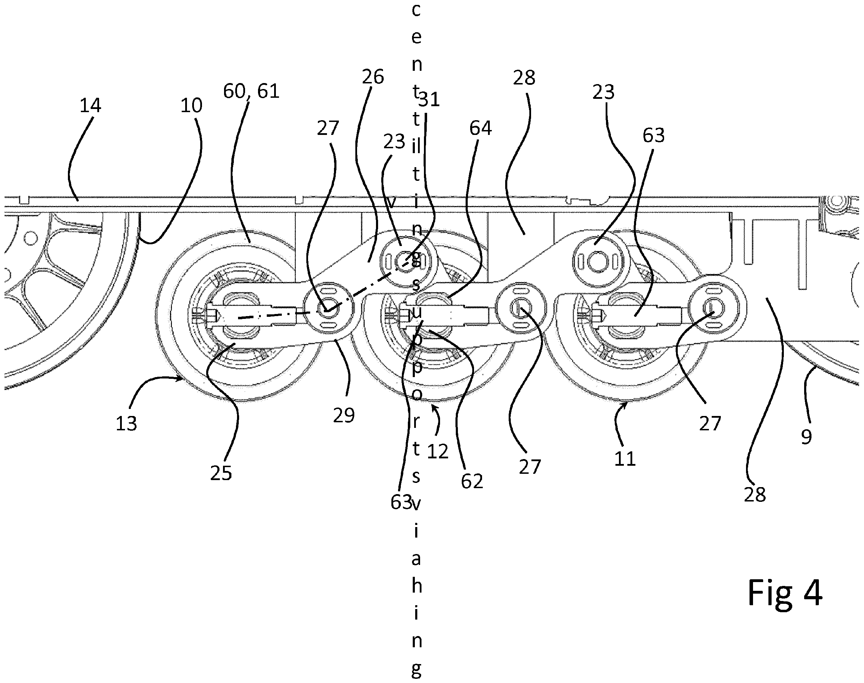

According to a first constructive embodiment of the invention (figure 3), tilting supports 20, 21, 22 are located below the undercarriage beam 14 and hinges 27 for connection with tilting supports are defined by stirrups 28 extending from beam 14 towards the ground opposite to driving wheel 7. In particular, tilting supports 20, 21, 22 are hinged one to the other. To do so, first and second end portions 25, 26 define an angle between 90° and 180° and hinge 27 is located in a vertex portion 29 of tilting support 20, 21, 22 formed between first and second end portions 25, 26. Angle between first and second end portions 25, 26 of the same tilting support 20, 21, 22 can be measured between lines converging in hinge 27 from the roller axis and the hinge for connection with the adjacent tilting support (dash-dotted lines in figure 4).

Furthermore the elastic or visco-elastic connection 23 is located below undercarriage beam 14 and comprises a rubber bushing mounted in hinge 31 for connection between two adjacent tilting supports 20, 21, 22. Preferably, the shape of tilting supports 20, 21, 22 and the position of hinges 27 and 31 is such to provide a kinematically fixed configuration. This means that, if the rubber bushing 23 were substituted by a rigid body, rollers 11, 12, 13 and tilting supports 20, 21, 22 could not move one with respect to the other. In such a condition, the provision of rubber bushings 23 in hinges 31 and optionally also in hinges 27 provides, by means of compression of the bushings depending on the obstacles encountered by track 6, relatives degrees of freedom between tilting supports 20, 21, 22 and, accordingly, between rollers 11, 12, 13. Such configuration therefore provides kinematic liability only in view of the fact that rubber bushings 23 are deformable. This results in a relatively stiff configuration of the suspension, i.e. the combination of tilting supports and elastic or visco-elastic connection.

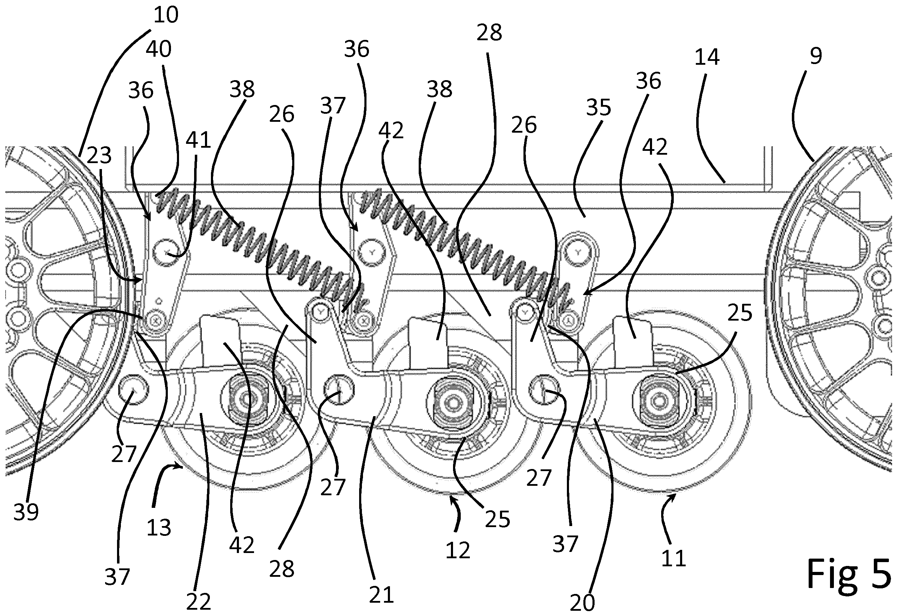

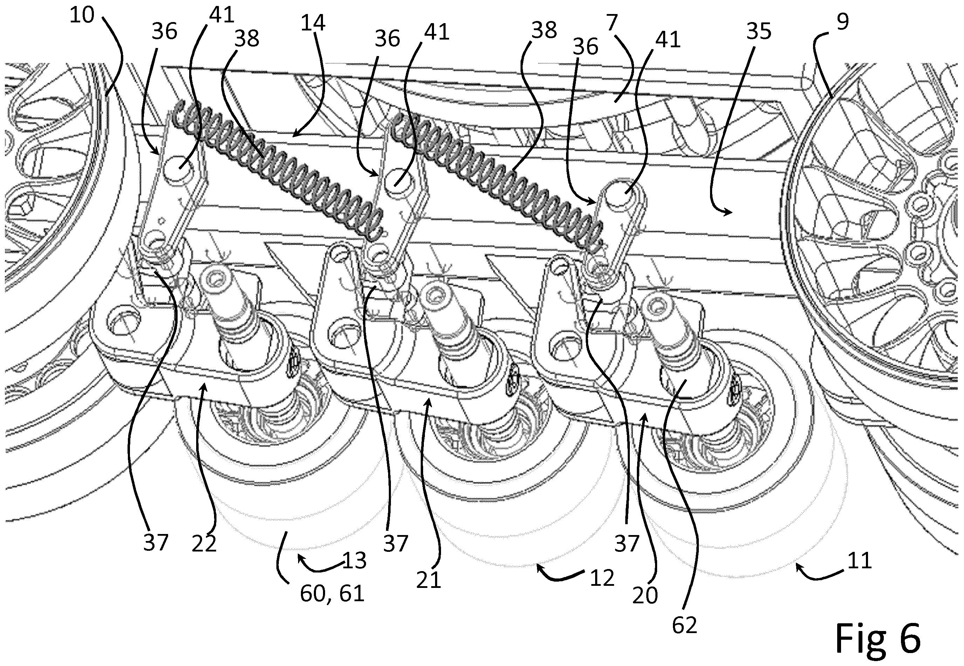

The embodiment of figures 5 and 6 differs from that of figures 3 and 4 in that connection 23 is purely elastic and at least in part faces lateral sides 35 of undercarriage beam 14. Furthermore connection 23 is articulated so that tilting supports 20, 21, 22 are kinematically liable because of the combination of an articulation and an elastic element. This provides a configuration that is less stiff with respect to that of figures 3 and 4. In particular, the articulation of connection 23 is such that, in order to obtain the desired effect that a leading roller moving down lifts up via connection 23 a trailing roller and vice versa, connection is between second end portions 26 of respective adjacent tilting supports.

In greater detail elastic connection 23 comprises, for each tilting support 20, 21, 22, a rocker 36 hinged to side 35; and a link 37 for connection to the second end portion 26. Rocker 36 and link 37 define an articulated joint. In order to provide a proper preload on rollers 11, 12, 13, in particular a pre-load such to tension track 6, elastic connection 23 comprises a spring 38, preferably a coiled spring, to apply a load on the articulated joint comprising rocker 36 and link 37. In particular spring 38 connects articulated joints transmitting loads to adjacent rollers. According to embodiment of figure 4 springs are attached to the articulated joint in order to be tensioned and not compressed.

As shown in figure 5, each rocker 36 comprises end portions 39, 40 opposite with respect to hinge 41. End portion 39 is attached to second end portion 26 via link 37 and end portion 40 is attached to the articulated joint of the adjacent roller via spring 38.

In view of the increased level of liability for the tilting of rollers 11, 12, 13, the embodiment of figure 5 comprises, for each tilting support 20, 21, 22 or connection 23, a relative stop 42 defining by abutment the closest position of a relative roller to undercarriage beam 14. Stop 42 is preferably carried on first end portion 25 by the relative tilting support 20, 21, 22.

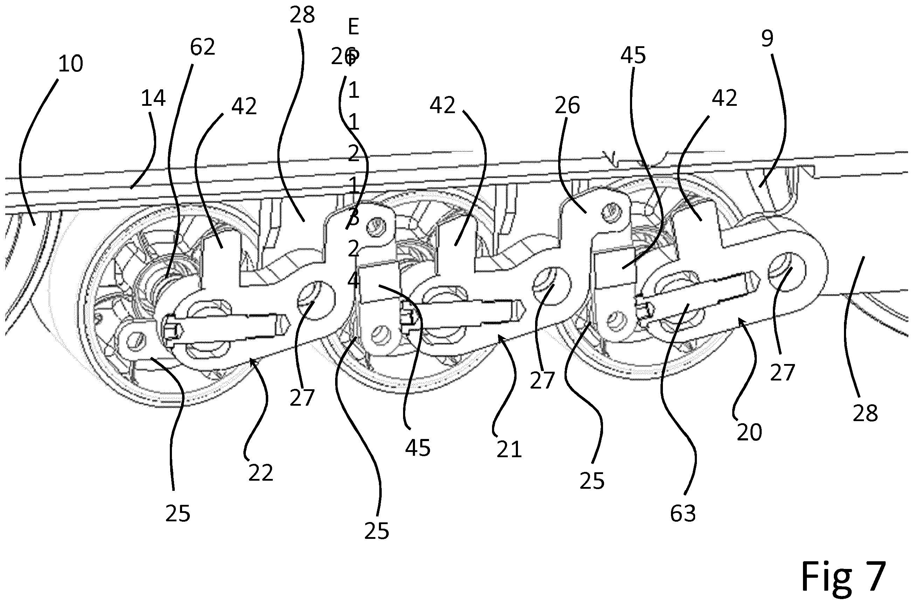

Alternative embodiment of figure 7 is similar to that of figures 5 and 6, with the only difference that connection 23 is constituted of an elastic or visco-elastic link 45 to connect second end portion 25 and first end portion 25 of adjacent tilting supports. Link 45 is mounted below undercarriage beam 14 and is hinged between adjacent tilting supports. Link 45 can be, for example, a compression spring optionally with a friction damping device.

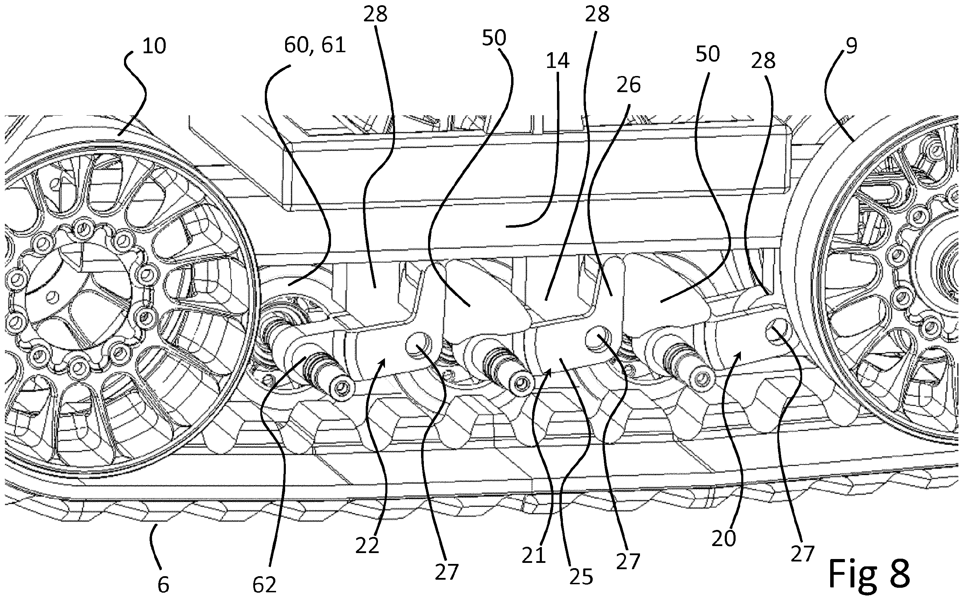

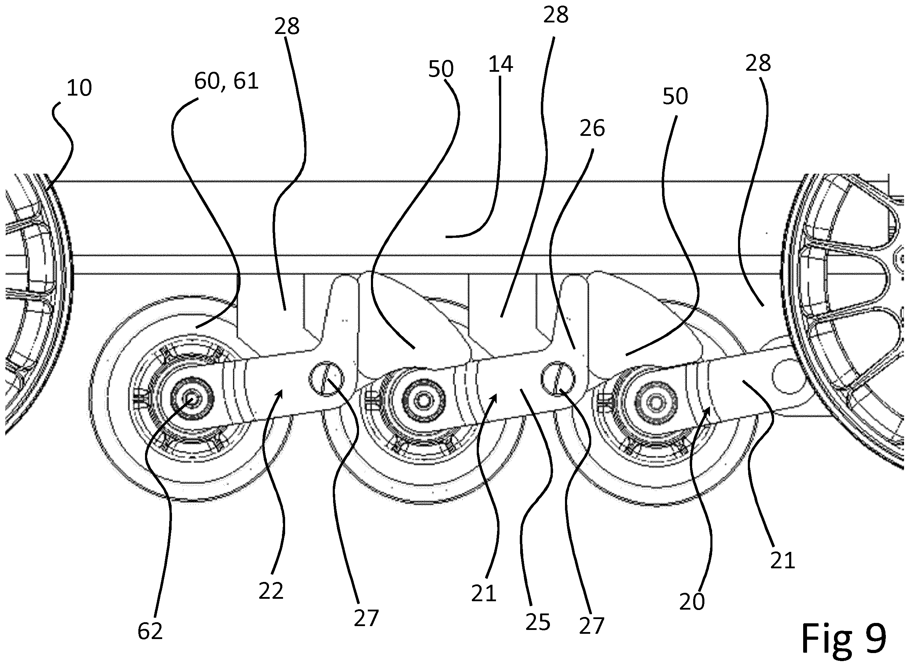

Further embodiment of figures 8 and 9 is similar to that of figure 7, with the only difference that connection 23 is a rubber block 50, preferably a reinforced rubber block, defining a deformable spacer between adjacent tilting supports 20, 21, 22. Rubber block 50 is compressed when adjacent tilting supports rotate in opposite angular directions. In order to provide proper absorption and/or load resistance, rubber block 50 shall have suitable dimensions and, to this regard, angular position between first and second end portions 25, 26 is comprised between 135° and 90°.

Rubber block 50 is located below undercarriage beam 14 and is preferably carried by the relevant tilting support 20, 21, 22. Conveniently rubber block 50 is interference fitted between second end portion 26 and first end portion 25 of adjacent tilting supports in order to provide, after mounting, a tensioning action on track 6. Rubber block 50 is preferably attached to one of the adjacent tilting supports and abuts without being attached to the other of the adjacent tilting supports.

As a preferable common feature to all embodiments discussed in the present application, rollers 11, 12, 13 comprise a first and a second wheel 60, 61 rigidly connected one to the other by a shaft 62. Each shaft 62 is pivotably attached to first end portion 25 of the relative tilting support in order to provide a rotational degree of freedom about and axis that is co-planar to a mid-plane of track 6 and/or of shaft 62.

Preferably (figure 4), pivoting axis of shaft 62 is defined by a pin 63, in particular a screwable pin, attached in a dedicated seat within first end portion 25. Shaft 62 is attached to pin 63. In order to restore a neutral position, i.e. a position wherein shaft 62 is substantially parallel to axes of drive wheel 7 and idler wheels 9, 10, a resilient element 64 acts on shaft 62. Preferably resilient element is housed at least in part or wholly within first end portion 25. According to one embodiment, resilient element 64 comprises rubber bushings, or a pack of rubber discs or the like and is coaxial to shaft 62.

It is preferable that elastic or visco-elastic connection 23 is designed such that, when travelling on a paved street, at least front idler wheel 9, preferably also idler wheel 10, are lifted from the paved surface. Without a prejudice to the stability of the work vehicle, this decreases wear on rubber track 6.

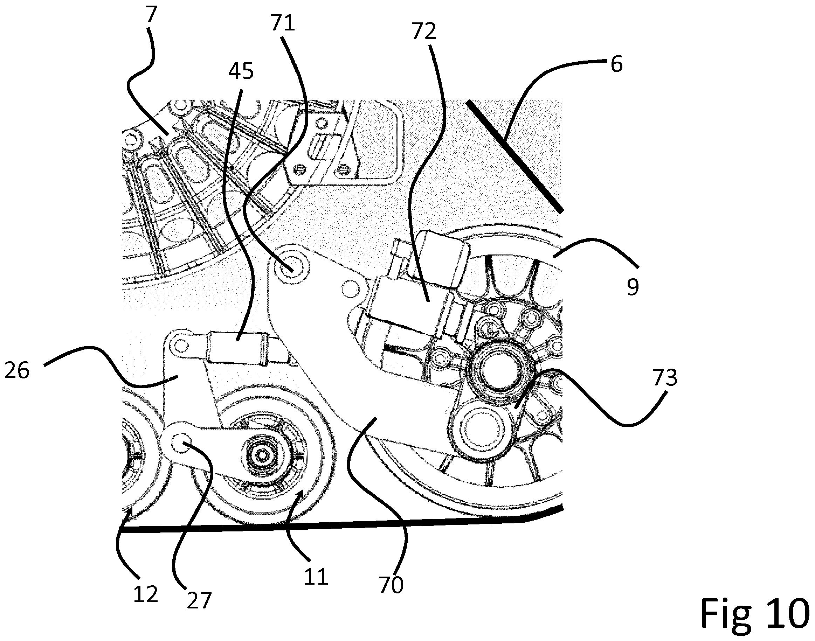

Figure 10 shows a further embodiment of the present invention wherein front idler wheel 9 is tilting with respect to undercarriage beam 14 and is attached to roller wheel 11 via connection 23 in order to obtain the desired effect that if leading idler wheel 9 moves down, the trailing roller wheel 11 moves up via connection 23 and vice versa.

In particular, a tilting support 70 is connected via hinge 71 to undercarriage beam 14 and carries front idler wheel 9. Tilting support 70 also carries a controllable tensioning apparatus 72, known in the art, to control the position of idler wheel 9 with respect to undercarriage beam 14. Preferably tensioning apparatus 72 comprises a pivoting link 73 connected to idler wheel 9 so that the latter is movable with respect to tilting support 70, and a tensioner or an actuator, preferably an hydraulic actuator, attached to idler wheel 9 or link 73 in order to apply a force and, thus, adjust the tension of track 6.

In order to obtain the desired effect cited in preceding passages of the description, second end portion 26 of tilting support 20 is attached to tilting support 70 via link 45.

The advantages of a track system according to the present invention are the following.

The provision of tilting supports connected one to the other by elastic or visco-elastic connections provides the combined effect of increasing effectiveness to overcome obstacles and, at the same time, reduce the wear of the track. Indeed a controlled compliance of the rollers is such to avoid tension peaks within the track when the ground is rough or non-homogeneous.

Embodiments where the connection 23 comprises an articulated joint and elastic or visco-elastic elements are hinged on the lateral side of undercarriage beam provide a layout that is efficient to reduce the distance between undercarriage beam 14 and rollers 11, 12, 13.

Embodiments where connections 23 are located below undercarriage beam 14 provide the lowest possible impact on undercarriage beam.

It is clear that changes and variations are applicable to the work vehicle according to the present invention without departing from the scope of protection as defined in the attached claims.

For example, track 6 can be arranged along a triangular path, as shown e.g. in figure 1, or along other paths. This may increase or reduce the number of idler wheels with respect to the embodiments discussed in the preceding paragraphs.

When at least three rollers are provided to guide track 6, two rollers may be attached to a single rigid and tilting support such as e.g. a walking beam, in order to rigidly tilt one with respect to the other when track 6 runs on an obstacle 24.

It is possible to retrofit existing work vehicles with a kit comprising at least the undercarriage beam (14), tilting supports 20, 21, 22 and connection 23.

## Claims

1. Track system (3) for a work vehicle, comprising a driving wheel (7), an undercarriage beam (14) hinged to a frame (2) of the vehicle, at least one idler wheel (9), at least a first and a second roller wheels (11, 12) attached to the undercarriage beam (14) and a rubber track (6) wound about at least driving wheel (7), idler wheel (9), first and second roller wheels (11, 12), comprising a first and a second tilting support (20, 21) to attach a relative roller wheel (11, 12) or idler wheel (9) to the undercarriage beam (14) and an elastic or visco-elastic connection (23) to join first and second adjacent tilting supports (20, 21) one to the other such that, when a leading wheel (11) moves down, a trailing wheel (12) is pushed up, and vice-versa, via the elastic or visco-elastic connection (23); and wherein at least a tilting support (20, 21) is below the undercarriage beam (14) **characterized in that** the connection (23) comprises at least one of a link (37, 45) and rocker (36) and wherein for each tilting support (20, 21) the at least one of a link (37, 45) and rocker (36) define an articulated joint wherein the connection (23) applies a load on the articulated joint and the connection (23) transmits loads to adjacent rollers (9, 10, 11).

2. Track system according to claim 1, wherein adjacent tilting supports (20, 21) and connection (23) define a kinematic structure that is configured to displace at least the leading and the trailing roller wheels (11, 12) because of the sole deformation of connection (23) or because connection (23) is articulated.

3. Track system according to claims 1 or 2, wherein at least one roller wheel comprises a first and a second wheels (60, 61), and a shaft (62) to connect first and second wheels (60, 61), the shaft being pivotally attached to a relevant tilting support (20, 21, 22).

4. Track system according to claim 3, wherein a spring (63) is provided to restore a neutral position of the shaft (62) such that the shaft is substantially parallel to axes of the idler wheel and/or the driving wheel (9, 7).

5. Track system according to any of the preceding claims, wherein connection (23) comprises a rubber bushing mounted at a hinge point (31) connecting the adjacent pivoting supports (20, 21), said busing being below the undercarriage beam (14).

6. Track system according to claim 5, wherein a further rubber bushing is mounted at a further hinge point (27) connecting the tilting support (20, 21) to the undercarriage beam (14).

7. Track system according to claim 1, wherein the rocker (36) and the link (37) are hinged one to the other and the rocker (36) faces a lateral side (35) of the undercarriage beam (14).

8. Track system according to claim 1, wherein the link (45) is hinged between the adjacent tilting supports (20, 21) and is located below the undercarriage beam (14).

9. Track system according claim 1, wherein tilting supports comprise a tensioning apparatus (73) for the idler wheel (9) and the link (45) is hinged to transfer a load between the idler wheel (9) and a roller wheel (11).

10. Track system according to any of claims 1 to 4, wherein connection (23) is a rubber block (50) carried on one of the adjacent tilting supports (20, 21) and abutting on the other of the adjacent tilting supports (20, 21).

11. Track system according to any of the preceding claims, wherein the elastic or visco-elastic connection (23) is pre-loaded in order to tension the track (6).

12. Method of retrofitting a work vehicle with a track system (3) according to claim 1.

13. Method according to claim 13, wherein first and second roller wheels (11, 12) are twin wheels.

## Patentansprüche

1. Raupenfahrwerksystem (3) für ein Arbeitsfahrzeug mit einem Antriebsrad (7), einem Fahrwerksträger (14), der gelenkig an einem Rahmen (2) des Fahrzeugs angebracht ist, zumindest einem Leitrad (9), zumindest einer ersten und einer zweiten Laufrolle (11, 12), die am Fahrwerksträger (14) angebracht sind, und einer Gummiraupe (6), die zumindest um das Antriebsrad (7), das Leitrad (9), und die erste und die zweite Laufrolle (11, 12) herumgeführt ist, umfassend eine erste und eine zweite schwenkbare Stütze (20, 21) zum Anbringen einer jeweiligen Laufrolle (11, 12) oder des Leitrads (9) am Fahrwerksträger (14), sowie eine elastische oder viskoelastische Verbindung (23) zum Verbinden der benachbarten ersten und zweiten schwenkbaren Stütze (20, 21) miteinander derart, dass ein Nachlaufrad (12) mittels der elastischen oder viskoelastischen Verbindung (23) nach oben gedrückt wird, wenn sich ein Vorlaufrad (11) nach unten bewegt und umgekehrt; und wobei zumindest eine schwenkbare Stütze (20, 21) unterhalb des Fahrwerksträgers (14) angeordnet ist, **dadurch gekennzeichnet, dass** die Verbindung (23) zumindest eines aus einem Bindeglied (37, 45) und einer Schwinge (36) umfasst und wobei das zumindest eine aus einem Bindeglied (37, 45) und einer Schwinge (36) für jede schwenkbare Stütze (20, 21) eine Gelenkverbindung definiert, wobei die Verbindung (23) eine Last auf die Gelenkverbindung ausübt und die Verbindung (23) Lasten auf benachbarte Rollen (9, 10, 11) überträgt.

2. Raupenfahrwerksystem nach Anspruch 1, wobei benachbarte schwenkbare Stützen (20, 21) und die Verbindung (23) eine kinematische Struktur definieren, die dazu eingerichtet ist, zumindest die vorlaufende und die nachlaufende Laufrolle (11, 12) alleine aufgrund der Verformung der Verbindung (23) oder aufgrund dessen, dass die Verbindung (23) ausgelenkt wird, zu verschieben.

3. Raupenfahrwerksystem nach Anspruch 1 oder 2, wobei zumindest eine Laufrolle ein erstes und ein zweites Rad (60, 61) und eine Welle (62) zum Verbinden des ersten und des zweiten Rads (60, 61) umfasst, wobei die Welle drehbar an der jeweiligen schwenkbaren Stütze (20, 21, 22) angebracht ist.

4. Raupenfahrwerksystem nach Anspruch 3, wobei eine Feder (63) vorgesehen ist, um eine neutrale Position der Welle (62) wiederherzustellen, sodass die Welle im Wesentlichen parallel zu den Achsen des Leitrads und/oder des Antriebsrads (9, 7) ist.

5. Raupenfahrwerksystem nach einem der vorangehenden Ansprüche, wobei die Verbindung (23) eine Gummibuchse umfasst, die an einem Drehpunkt (31) angebracht ist, der die benachbarten schwenkbaren Stützen (20, 21) verbindet, wobei die Buchse unterhalb des Fahrwerksträgers (14) angeordnet ist.

6. Raupenfahrwerksystem nach Anspruch 5, wobei eine weitere Gummibuchse an einem weiteren Drehpunkt (27) angebracht ist, der die schwenkbaren Stützen (20, 21) mit dem Fahrwerksträger (14) verbindet.

7. Raupenfahrwerksystem nach Anspruch 1, wobei die Schwinge (36) einer Seite (35) des Fahrwerksträgers (14) zugewandt ist.

8. Raupenfahrwerksystem nach Anspruch 1, wobei das Bindeglied (45) zwischen den benachbarten schwenkbaren Stützen (20, 21) gelenkig gelagert ist und unterhalb des Fahrwerkrahmens (14) angeordnet ist.

9. Raupenfahrwerksystem nach Anspruch 1, wobei die schwenkbaren Stützen eine Spanneinrichtung (73) für das Leitrad (9) umfassen und das Bindeglied (45) gelenkig gelagert ist, um eine Last zwischen dem Leitrad (9) und einer Laufrolle (11) zu übertragen.

10. Raupenfahrwerksystem nach einem der Ansprüche 1 bis 4, wobei die Verbindung (23) ein Gummiblock ist, der von einer der benachbarten schwenkbaren Stützen (20, 21) getragen wird und an die andere der benachbarten schwenkbaren Stützen (20, 21) angrenzt.

11. Raupenfahrwerksystem nach einem der vorangehenden Ansprüche, wobei die elastische oder viskoelastische Verbindung (23) vorgespannt ist, um die Raupe (6) zu spannen.

12. Verfahren zum Nachrüsten eines Arbeitsfahrzeugs mit einem Raupenfahrwerksystem (3) nach Anspruch 1.

13. Verfahren nach Anspruch 13, wobei sowohl die erste als auch die zweite Laufrolle (11, 12) Zwillingsrollen sind.

## Revendications

1. Système de chenilles (3) pour engin de travail, comprenant une roue d'entraînement (7), une traverse de train de roulement (14) articulée sur un cadre (2) de l'engin, au moins une roue folle (9), au moins un premier et un deuxième galet de roulement (11, 12) fixés à la traverse de train de roulement (14) et une chenille d'entraînement en caoutchouc (6) enroulée autour d'au moins une roue d'entraînement (7), une roue folle (9), des premier et deuxième galets de roulement (11, 12), comprenant un premier et un deuxième support basculant (20, 21) permettant de fixer un galet de roulement relatif (11, 12) ou une roue folle (9) à la traverse de train de roulement (14) et un liaison élastique ou viscoélastique (23) permettant de relier les premier et deuxième supports pivotants adjacents (20, 21) l'un à l'autre, de manière à ce que, lorsqu'une roue conductrice (11) descend, une roue arrière (12) soit poussée vers le haut et vice versa par le biais de la liaison élastique ou viscoélastique (23) ; et dans lequel au moins un support basculant (20, 21) se trouve au-dessous de la traverse de train de roulement (14) **caractérisé en ce que** la liaison (23) comprend au moins un parmi un lien (37, 45) et une bascule (36) et dans lequel au moins un parmi un lien (37, 45) et une bascule (36) définit un joint articulé pour chaque support basculant (20, 21), dans lequel la liaison (23) applique une charge sur le joint articulé et la liaison (23) transmet des charges aux galets adjacents (9, 10, 11).

2. Système de chenilles selon la revendication 1, dans lequel les supports basculants adjacents (20, 21) et la liaison (23) définissent une structure cinématique configurée pour déplacer au moins les galets de roulement conducteur et arrière (11, 12) dû à la seule déformation de la liaison (23) ou au fait que la liaison (23) soit articulée.

3. Système de chenilles selon les revendications 1 à 2, dans lequel au moins un galet de roulement comprend une première et une deuxième roue (60, 61) et un arbre (62) permettant de relier les première et deuxième roues (60, 61), l'arbre étant attaché de manière pivotante à un support basculant correspondant (20, 21, 22).

4. Système de chenilles selon la revendication 3, dans lequel un ressort (63) est prévu pour rétablir une position neutre de l'arbre (62), de manière à ce que l'arbre soit sensiblement parallèle aux axes de la roue folle et/ou de la roue d'entraînement (9, 7).

5. Système de chenilles selon l'une quelconque des revendications précédentes, dans lequel la liaison (23) comprend une douille en caoutchouc montée au niveau d'une articulation (31) reliant les supports pivotants adjacents (20, 21), ladite douille se trouvant au-dessous de la traverse de train de roulement (14).

6. Système de chenilles selon la revendication 5, dans lequel une autre douille en caoutchouc est montée au niveau d'une autre articulation (27) reliant le support basculant (20, 21) et la traverse de train de roulement (14).

7. Système de chenilles selon la revendication 1, dans lequel la bascule (36) et le lien (37) sont articulés l'une sur l'autre et la bascule (36) se trouve en regard du côté latéral (35) de la traverse de train de roulement (14).

8. Système de chenilles selon la revendication 1, dans lequel le lien (45) est articulé entre les supports basculants adjacents (20, 21) et est placé sous la traverse de train de roulement (14).

9. Système de chenilles selon la revendication 1, dans lequel les supports basculants comprennent un dispositif tendeur (73) pour la roue folle (9) et le lien (45) est articulé afin de transférer une charge entre la roue folle (9) et le galet de roulement (11).

10. Système de chenilles selon l'une quelconque des revendications 1 à 4, dans lequel la liaison (23) est un bloc en caoutchouc (50) monté sur un des supports basculants adjacents (20, 21) et attenant les autres supports basculants adjacents (20, 21).

11. Système de chenilles selon l'une quelconque des revendications précédentes, dans lequel la liaison élastique ou viscoélastique (23) est préinstallée afin de tendre les chenilles (6).

12. Méthode de mise en conformité d'un engin de travail avec système de chenilles (3) selon la revendication 1.

13. Méthode selon la revendication 13, dans laquelle les premier et deuxième galets de roulement (11, 12) sont des roues jumelées.
